# EUROPÄISCHE PATENTANMELDUNG

(11) **EP 4 052 944 A1**
(43) Veröffentlichungstag der Anmeldung: **07.09.2022**
(21) Anmeldenummer: 22020090.1
(22) Anmeldetag: 04.03.2022
(51) Int. Cl.: B60K 7/00, F16D 65/18

(54) **ELEKTROFAHRZEUG MIT FESTSTELLBREMSANORDNUNG SOWIE VERWENDUNG EINER BREMSSATTEL-BREMSSCHEIBEN-ANORDNUNG ZUM FESTSTELLEN EINER ABTRIEBSWELLE EINES ELEKTROMOTORS**

(30) Priorität: 04.03.2021 DE 102021105308
(71) Anmelder: Orten Electric-Trucks GmbH, 54470 Bernkastel-Kues (DE)
(72) Erfinder: KEMMNITZ, Wilhelm, 54340 Bekond (DE)
(74) Vertreter: Kutsch, Bernd

(57) **Zusammenfassung**

Die Erfindung betrifft eine Verwendung einer Bremssattel-Bremsscheiben-Anordnung zum Erreichen eines sicheren Stands eines Elektrofahrzeugs, wobei das direkte Feststellen zumindest einer Abtriebswelle (24) bewirkbar ist. Ferner betrifft die Erfindung eine Feststellbremseinrichtung für einen Elektromotor (20). Seine Abtriebswelle (24) weist beispielsweise einen sich radial nach außen erstreckenden Kragen (28) auf, der zum direkten Feststellen der Abtriebswelle und mithin zumindest eines Abtriebsstranges mit Bodenkontakt blockierbar ist.

## Beschreibung

Die Erfindung betrifft eine Verwendung einer Bremssattel-Bremsscheiben-Anordnung. Ferner betrifft die Erfindung eine Feststellbremseinrichtung für ein Elektrofahrzeug.

Elektrofahrzeuge können derzeit je nach Ausstattung ungewollt wegrollen oder weiterrollen, insbesondere in Zustellarbeitsabläufen. Es ist daher eine Aufgabe, Straßenverkehrsteilnehmer besser vor einem ungewollten Wegrollen eines Elektrofahrzeugs zu schützen. Da in Elektrofahrzeugen oft kein Getriebe verbaut ist, fallen bisher genutzte Feststelloptionen, wie das Gang einlegen, weg.

Die Erfindung schlägt eine Verwendung einer bekannten Bremsanordnung als Feststellbremsanordnung für Elektrofahrzeuge sowie eine neuartige Automatik vor, wie eine bisher so nicht angeordnete Bremse in das Antriebssystem des Fahrzeugs greift.

Eine erfindungsgemäße Verwendung ist in Anspruch 1 angegeben und hiermit per Verweis zu einem Bestandteil der Beschreibung gemacht. Gleiches gilt für die erfindungsgemäße Feststellbremsanordnung nach Anspruch 2 sowie das Elektrofahrzeug nach Anspruch 7.

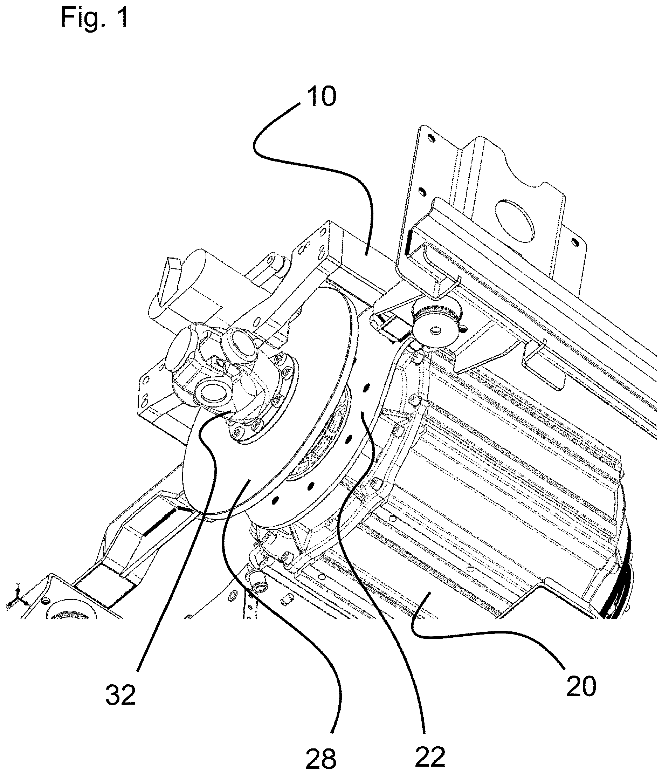

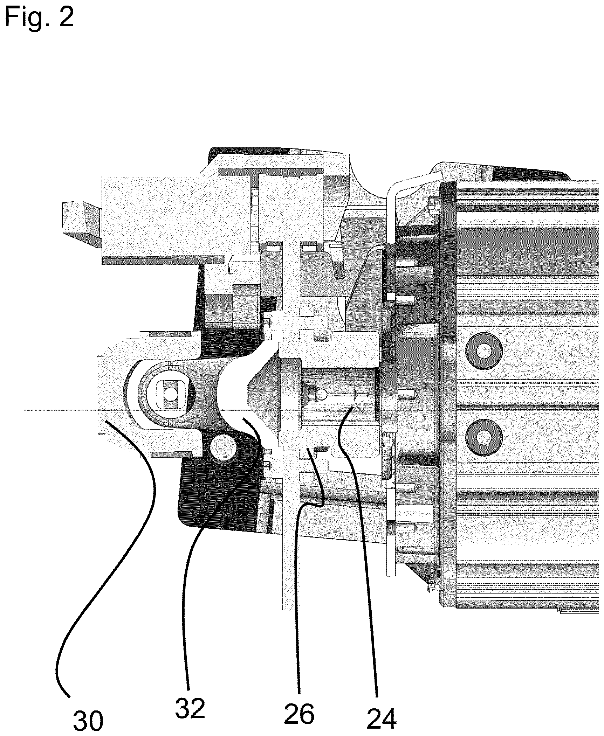

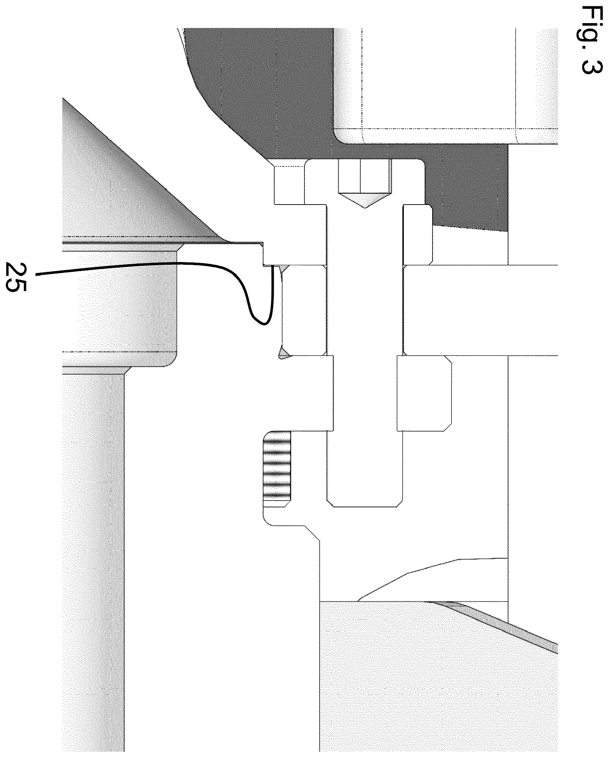

Vorteilhafte Ausführungsformen sind den Unteransprüchen sowie der nachfolgenden Figurenbeschreibung und eine besonders bevorzugte Ausführungsform den Figuren 1 bis 3 selbst zu entnehmen.

Die erfindungsgemäße Feststellbremsanordnung ist direkt zumindest einem Elektromotor (20) zugeordnet, der zumindest eine Abtriebswelle (24) aufweist. Die Abtriebswelle (24) weist einen sich radial nach außen erstreckenden Kragen (28) auf. Der Kragen (28) ist radial außen zumindest auf einer Seite und / oder von radial außen mittels einer Feststelleinrichtung und insbesondere mittels eines in direkten Kontakt mit dem Kragen tretenden Feststellelements gegen weitere Rotation sperrbar.

Gemäß einer vorteilhaften Ausführungsform ist der Kragen (28) einteilig mit der Abtriebswelle (24) ausgeführt, insbesondere angeformt.

Gemäß einer weiteren vorteilhaften Ausführungsform ist eine Scheibe als Kragen (28) auf die Abtriebswelle (24) aufgeschoben, insbesondere mit Presspassung.

Gemäß einer weiteren vorteilhaften Ausführungsform ist die Abtriebswelle (24) als ein Flansch, insbesondere als ein Kardanwellenflansch (32), ausgebildet. Der Kragen (28) ist dabei zwischen Abtriebswellenflansch (26) und Kardanwellenflansch (32) eingespannt.

Gemäß einer weiteren vorteilhaften Ausführungsform umgreift das Feststellelement einer üblichen Bremsbacken-Anordnung von radial außen den Kragen (28). Besonders bevorzugt sind es ausschließlich in einem einzigen Bremssattel angeordnete Bremsbacken, sodass der Kragen (28) dennoch sicher axial von beiden Seiten feststellbar ist, besonders bevorzugt mittels einer parallel zur Motorachse verdrehbaren Spindel.

An der Motoranbindung 26, 32 zur Kardanwelle 30 wird in dem besonders bevorzugten Ausführungsbeispiel nach den Figuren 1 bis 3 eine "Bremsscheibe" als ein Kragen 28 der Abtriebswelle 24 montiert. Diese wird mit einem elektronischen Bremssattel nach Festlegung definierter Bedingungen gegriffen. Dadurch kann die Kardanwelle nicht mehr frei oder beinahe frei drehen, wie es ihr in herkömmlichen Elektromotoren sonst erlaubt bliebe. Resultierend daraus ist im Fall eines bevorzugten Ausführungsbeispiels eines nicht näher dargestellten Elektrofahrzeugs mit einer solchen Elektromotoreinbindung, dass die Räder der Hinterachse blockiert sind, ebenfalls nicht mehr drehen und das Fahrzeug somit sicher und gebremst steht.

Seine Abtriebswelle (24) weist beispielsweise einen sich radial nach außen erstreckenden Kragen (28) auf, der zum direkten Feststellen der Abtriebswelle (24) und mithin zumindest eines Abtriebsstranges mit Bodenkontakt blockierbar ist.

Die Erfindung schlägt in besonderen Ausführungsformen, insbesondere auch bevorzugter Verfahren zur Sicherung eines Elektrofahrzeugs, folgende Bedingungen vor, wie und wann die Bremse greifen soll. Nach Festlegung einer Basisfunktion kann das im Rahmen der Erfindung in besonders bevorzugten Ausführungsformen mit verschiedenen weiteren Funktionen erweitert werden:
Basisbedingungen:
   - Das Fahrzeug muss bereits vor dem Auslösen der Feststellbetätigung stehen.
   - Der Motor muss ohne Drehmoment sein.
   - Der Motor darf sich nicht drehen, was ggf. aber zwangsweise an Basisbedingung 1 gekoppelt ist.
Aktivierungsbedingungen in Verbindung mit der Basisbedingung:
   - Die "Zündung" des Fahrzeugs muss ausgeschaltet sein.
   - Ein Druckschalter im Fahrersitz schaltet, sobald der/die Fahrer/-in vom Fahrersitz aufsteht.
   - Die Fahrertür wird geöffnet.

Die Basisfunktion muss immer vorhanden sein. Damit die Feststellbremse greift muss dann erfindungsgemäß mindestens eine Aktivierungsbedingung gegeben sein.

Technischer Ablauf im Fall einer bevorzugten Ausführungsform: Wenn die Bedingung für ein Aktivieren der Feststellbremse gegeben ist, wird der Motor des Bremssattels bestromt, bis die Bremse komplett gegriffen hat. In diesem verschlossenen Zustand bleibt die Feststellbremse, bis alle Aktivierungsbedingungen deaktiviert sind. Wenn alle Aktivierungsbedingungen deaktiviert sind, wird der Motor des Bremssattels in umgepolter Richtung bestromt, der Zylinder des Bremssattels fährt zurück, öffnet die Bremse und das Fahrzeug kann wieder bewegt werden.

### Bezugszeichenliste:

- 10: Fahrzeuggestell

- 20: Elektromotor
- 22: Motoraufnahme
- 24: Abtriebswelle
- 25: Lücke
- 26: Abtriebswellenflansch
- 28: Kragen

- 30: Kardanwelle
- 32: Kardanwellenflansch

## Patentansprüche

1. Verwendung einer Bremssattel-Bremsscheiben-Anordnung zum Feststellen einer Abtriebswelle (24).

2. Feststellbremsanordnung, mit einem Elektromotor (20), der zumindest eine Abtriebswelle (24) aufweist, dessen Abtriebswelle (24) einen sich radial nach außen erstreckenden Kragen (28) aufweist, welcher Kragen (28) radial außen zumindest auf einer Seite oder von radial außen mittels eines Feststellelements gegen weitere Rotation sperrbar ist.

3. Feststellbremsanordnung nach Anspruch 2
**dadurch gekennzeichnet, dass**
der Kragen (28) einteilig mit der Abtriebswelle (24) ausgeführt ist, insbesondere angeformt.

4. Feststellbremsanordnung nach Anspruch 2
**dadurch gekennzeichnet, dass**
eine Scheibe als Kragen (28) auf die Abtriebswelle (24) aufgeschoben ist, insbesondere als Presspassung.

5. Feststellbremsanordnung nach Anspruch 2
**dadurch gekennzeichnet, dass**
die Abtriebswelle (24) als ein Flansch, insbesondere als ein Kardanwellenflansch (32), ausgebildet ist und dass der Kragen (28) zwischen Abtriebswellenflansch (26) und Kardanwellenflansch (32) eingespannt ist.

6. Feststellbremsanordnung nach Anspruch 2
**dadurch gekennzeichnet, dass**
das Feststellelement eine übliche Bremsbacken-Anordnung in einem von radial außen den Kragen (28) umgreifenden Bremssattel ist, sodass der Kragen (28) axial von beiden Seiten feststellbar ist.

7. Elektrofahrzeug mit einer Feststellbremsanordnung nach einem der Ansprüche 2 bis 6.
